# FASCICULE DE BREVET EUROPEEN

(11) **EP 2 532 908 B1**
(45) Date de publication et mention de la délivrance du brevet: **11.06.2014**
(21) Numéro de dépôt: 12170655.0
(22) Date de dépôt: 04.06.2012
(51) Int. Cl.: F16D 3/04, F16D 3/78

(54) **Dispositif d'accouplement entre moteur et réducteur de direction assistée électrique de véhicule automobile**
Kupplungseinrichtung zwischen einen Antrieb und ein Getriebe in einer elektrischen Servolenkung
Clutch device between a motor and a gear train assembly in an automotive electric power steering device

(30) Priorité: 08.06.2011 FR 1154970
(43) Date de publication de la demande: 12.12.2012
(73) Titulaire: Jtekt Europe, 69540 Irigny (FR)
(72) Inventeur: Lachaux, Vincent, 38550 Le Peage de Roussillon (FR); Chauvrat, Philippe, 01480 Villeneuve (FR); Thomas, Charlie, 69360 Simandres (FR); Plateret, Nicolas, 69630 Chaponost (FR)
(74) Mandataire: Chevalier, Renaud Philippe

(56) Documents cités:
- EP-A1- 1 714 851
- WO-A1-99/65758
- WO-A1-2008/093861
- FR-A- 832 123
- GB-A- 2 230 316
- JP-A- 2006 083 953
- US-A- 1 417 432
- US-A- 3 063 264
- US-A- 5 816 113
- US-A1- 2004 185 945
- US-B1- 6 517 439

## Description

La présente invention concerne, de manière générale, le domaine technique des systèmes de direction des véhicules automobiles. Elle se rapporte, plus particulièrement, aux systèmes de direction pourvus d'un dispositif d'assistance électrique, avec un moteur électrique d'assistance accouplé, par l'intermédiaire d'un réducteur à vis sans fin et roue tangente, à un élément mobile tel que pignon appartenant au système de direction. Encore plus particulièrement, cette invention s'intéresse à un dispositif d'accouplement, placé entre le électrique et le réducteur d'une telle direction assistée électrique.

Dans une direction assistée électrique, un moteur électrique est accouplé, par l'intermédiaire d'un réducteur de vitesse, à un élément mobile de la direction tel que la colonne de direction ou le pignon de direction, ou la crémaillère. Pour obtenir la démultiplication souhaitée, le réducteur intercalé entre le moteur électrique d'assistance et l'élément à entraîner est notamment un réducteur du type à vis sans fin et roue tangente.

Un tel réducteur à engrenages est le siège de jeux, par exemple des jeux d'engrènement qui, en cours de fonctionnement, sont à l'origine de vibrations et de bruits plus ou moins gênants. Des dispositifs de rattrapage de jeu sont donc généralement prévus.

Il convient aussi de tenir compte d'un éventuel désalignement, entre l'arbre du moteur électrique d'assistance, d'une part, et l'arbre d'entrée du réducteur autrement dit la vis sans fin, d'autre part. Une solution particulière d'accouplement, décrite dans le brevet français FR 2833556, utilise une partie intermédiaire annulaire élastiquement déformable notamment en élastomère ou en caoutchouc, pourvue de cannelures, cette partie intermédiaire étant intercalée entre deux éléments rigides, notamment métalliques, de forme générale cylindrique.

Une autre solution, actuellement utilisée pour accoupler l'arbre du moteur électrique d'assistance avec la vis sans fin du réducteur, consiste dans la combinaison de deux flasques rigides, chacun avec trois ou quatre branches en forme de « V » ou droites, qui sont imbriqués l'un dans l'autre avec interposition d'un élément d'accouplement souple, habituellement réalisé en caoutchouc ou en polyuréthane, présentant une forme étoilée - voir document WO99/65758. L'élément d'accouplement souple est monté de façon plus ou moins serrée entre les deux flasques, cet élément d'accouplement permettant d'accepter un désalignement des axes du moteur et de la vis sans fin et/ou un angle d'inclinaison de l'un de ces axes par rapport à l'autre.

WO 2008/093861 A1 décrit une autre solution d'accouplement particulière dans un système de direction.

Les réalisations d'accouplement actuelles rappelées ci-dessus, constituées de trois éléments séparés, permettent ainsi d'accepter des tolérances sur l'alignement et l'orientation de l'arbre du moteur et de la vis sans fin, en mettant à profit la souplesse d'un élément intermédiaire. Ils conservent toutefois les inconvénients suivants :
- Sous l'aspect du fonctionnement : le fait d'avoir des flasques à trois ou quatre branches induit des efforts radiaux tournants, lorsque la vis sans fin est mise en charge. En effet, le fonctionnement du dispositif de rattrapage de jeu crée un angle entre l'arbre du moteur électrique d'assistance et la vis sans fin sous charge, angle qui s'ajoute au défaut initial d'alignement entre l'arbre du moteur et la vis sans fin, de sorte que le moteur ne fonctionne pas dans de bonnes conditions. Il en résulte aussi une amplification du bruit du moteur électrique d'assistance.
- Sous l'aspect de l'assemblage : chacun des deux flasques doit être emmanché, respectivement sur l'arbre du moteur électrique d'assistance et sur l'arbre de la vis sans fin, ce qui implique que soit prévu un bon maintien de chaque arbre, pour éviter un flambage, et que chaque flasque soit réalisé en acier. Après emmanchement des deux flasques, l'élément d'accouplement souple doit être monté soit sur le flasque lié à l'arbre du moteur, soit sur le flasque lié à la vis sans fin, puis il convient d'assembler le moteur sur le réducteur, tout en s'assurant que le flasque côté moteur et le flasque côté réducteur soient bien montés sur l'élément d'accouplement souple et le restent. L'assemblage est donc complexe et il nécessite en particulier des opérations multiples, dont certaines sont délicates et peuvent conduire à un montage ou un positionnement incorrects.

La présente invention vise à remédier aux inconvénients précédemment exposés, en fournissant un dispositif d'accouplement entre moteur et réducteur qui d'une part supprime la transmission d'efforts radiaux entre l'arbre du moteur et la vis sans fin, tout en acceptant un désalignement et un angle plus important entre l'arbre du moteur et la vis sans fin, et qui d'autre part simplifie les opérations d'assemblage, tout en garantissant un montage correct avec un bon positionnement des composants.

A cet effet, l'invention a pour objet un dispositif d'accouplement entre un moteur électrique et un réducteur d'une direction assistée électrique de véhicule automobile, plus particulièrement entre l'arbre du moteur électrique d'assistance et une vis sans fin constituant un arbre d'entrée du réducteur, le dispositif d'accouplement étant caractérisé par le fait qu'il est constitué par :
- un premier flasque comportant deux têtes sphériques diamétralement opposées, le premier flasque étant monté sur l'arbre du moteur électrique,
- un second flasque comportant deux têtes sphériques diamétralement opposées, le second flasque étant monté sur une extrémité de la vis sans fin, en regard du premier flasque,
- une pièce d'accouplement en forme de disque, insérée entre les deux flasques, la pièce d'accouplement comportant, sur l'une de ses faces, deux rainures à fond sphérique diamétralement opposées, logeant respectivement les deux têtes sphériques du premier flasque, et cette pièce d'accouplement comportant, sur son autre face, deux autres rainures à fond sphérique diamétralement opposées, disposées suivant un diamètre perpendiculaire au diamètre suivant lequel sont disposées les précédentes rainures, ces autres rainures logeant respectivement les deux têtes sphériques du second flasque.

Grâce à sa configuration, le dispositif d'accouplement objet de l'invention supprime la transmission d'efforts radiaux entre l'arbre du moteur électrique d'assistance et la vis sans fin, quel que soit l'angle formé par cet arbre et par la vis sans fin. Ce dispositif d'accouplement permet aussi d'accepter un désalignement plus important entre l'arbre du moteur et la vis sans fin. Ceci résulte du fait que les deux flasques, respectivement liés à l'arbre du moteur et à la vis sans fin, ne comportent chacun que deux têtes sphériques positionnées à 180°, l'une par rapport à l'autre, tandis que la pièce d'accouplement comporte des rainures de forme correspondante donc sphériques elles aussi, telles que les deux flasques soient positionnés à 90° l'un par rapport à l'autre. Ceci permet de ne pas contraindre le dispositif d'accouplement au moment de son montage, et par conséquent de ne pas avoir d'efforts résiduels induits entre les deux flasques. On évite ainsi le flambage des arbres à l'emmanchement, lors de l'assemblage tout en obtenant un fonctionnement plus silencieux.

La réduction des efforts subis ou transmis par le dispositif d'accouplement, aussi bien à l'assemblage qu'en cours de fonctionnement, permet aussi une réalisation plus légère de ce dispositif, notamment par le recours à la matière plastique, d'où une réduction de sa masse et aussi de son inertie.

L'invention permet aussi de simplifier l'assemblage du dispositif d'accouplement, tout en garantissant la bonne position des divers éléments, notamment en prévoyant que :
- le premier flasque comporte, pour son montage sur l'arbre du moteur électrique, des cannelures axiales internes formées sur son moyeu et prévues pour être engagées sur une partie terminale cannelée dudit arbre, des moyens de serrage étant prévus pour immobiliser axialement le premier flasque sur cet arbre dans une position relative appropriée ;
- le second flasque comporte, pour son montage sur l'extrémité de la vis sans fin, des cannelures axiales internes formées sur son moyeu et prévues pour être engagées sur cette extrémité cannelée de la vis sans fin, une vis de fixation centrale étant prévue pour le maintien du second flasque sur l'extrémité de la vis sans fin.

L'assemblage peut alors être réalisé avec un nombre minimum d'opérations.

L'invention sera mieux comprise, et d'autres caractéristiques et avantages seront mis en évidence, à l'aide de la description qui suit se référant au dessin schématique annexé qui représente, à titre d'exemples, quelques formes d'exécution de ce dispositif d'accouplement :
Figure 1 est une vue partielle et en coupe d'un moteur électrique d'assistance et d'un réducteur accouplés par le dispositif de l'invention ;
Figure 2 est une vue en perspective éclatée du dispositif d'accouplement de l'invention ;
Figure 3 est une vue de face du flasque côté vis sans fin ;
Figure 4 est une vue de côté du flasque de la figure 3 ;
Figure 5 est une vue en coupe axiale de ce flasque, suivant V-V de figure 3 ;
Figure 6 est une vue de face de la pièce d'accouplement ;
Figure 7 est une vue de côté de cette pièce d'accouplement ;
Figure 8 est une vue partielle en coupe, illustrant l'engagement d'une tête sphérique d'un flasque dans une rainure de la pièce d'accouplement ;
Figure 9 est une vue partielle en perspective de la pièce d'accouplement, dans un mode de réalisation particulier ;
Figure 10 est une vue partielle en coupe, en correspondance avec la figure 9 ;
Figure 11 est une vue partielle en perspective de la pièce d'accouplement, dans un autre mode de réalisation ;
Figure 12 est une vue partielle en coupe, en correspondance avec la figure 11 ;
Figure 13 est une vue en perspective de la pièce d'accouplement, dans encore un autre mode de réalisation ;
Figure 14 est une vue partielle en coupe, en correspondance avec la figure 13 ;
Figure 15 est une vue en perspective de la pièce d'accouplement, dans un dernier mode de réalisation correspondant aux figures 6 et 7 ;
Figure 16 est une vue partielle en coupe, en correspondance avec la figure 15.

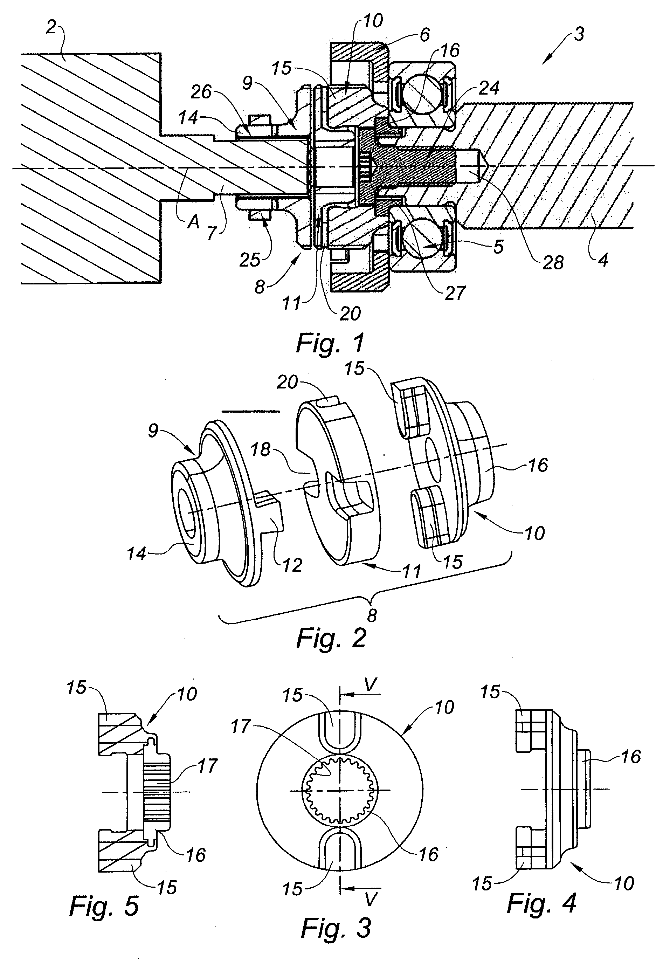

La figure 1 représente partiellement une direction assistée électrique et plus particulièrement son dispositif d'assistance, lequel comprend un moteur électrique 2 à deux sens de rotation qui, par l'intermédiaire d'un réducteur 3, agit sur un élément à entraîner tel que la colonne de direction ou le pignon de direction ou la crémaillère. Le réducteur 3 est ici du type à vis sans fin 4 et roue tangente, la vis sans fin 4 étant montée tournante dans des paliers tels qu'un palier 5 du genre roulement, maintenu lui-même par une bague de blocage 6 vissée. L'axe A de la vis sans fin 4 étant idéalement confondu avec l'axe de l'arbre 7 du moteur électrique 2 d'assistance, on s'intéresse plus particulièrement à un dispositif d'accouplement 8, placé entre l'arbre 7 et la vis sans fin 4.

Comme le montre la figure 2, le dispositif d'accouplement 8 se compose de trois éléments, à savoir un premier flasque 9 situé du côté du moteur électrique 2, un second flasque 10 situé du côté de la vis sans fin 4, et une pièce d'accouplement 11 intermédiaire insérée entre les deux flasques 9 et 10.

Le premier flasque 9 comporte deux têtes sphériques 12, excentrées et diamétralement opposées. Il est pourvu d'un moyeu central 14, pour son montage sur l'arbre 7 du moteur électrique 2.

Le second flasque 10, représenté sur les figures 3 à 5, comporte lui aussi deux têtes sphériques 15 excentrées et diamétralement opposées. Il est pourvu d'un moyeu central 16, pour son montage sur l'extrémité 17 de la vis sans fin 4 faisant face à l'arbre 7 du moteur électrique 2.

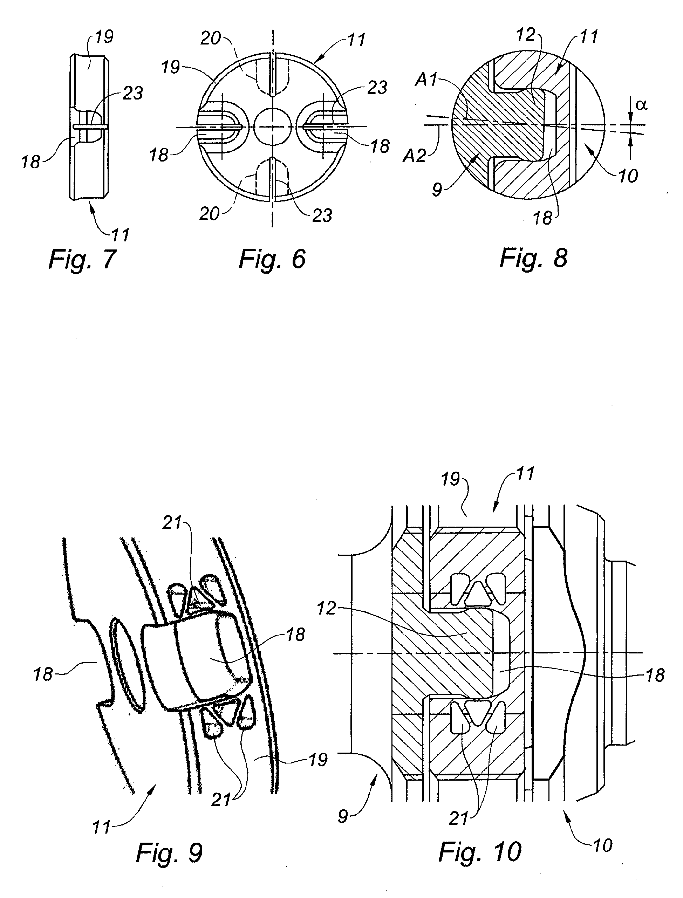

La pièce d'accouplement 11, en forme de disque, comporte sur l'une de ses faces circulaires deux rainures 18 à fond sphérique, diamétralement opposées, comme le montre la figure 6. Les rainures 18 débouchent sur la face périphérique 19 de cette pièce d'accouplement 11, comme le montre la figure 7.

Sur son autre face circulaire, la pièce d'accouplement 11 comporte deux autres rainures 20 à fond sphérique, diamétralement opposées, qui débouchent elles aussi sur la face périphérique 19. Ces deux autres rainures 20 sont disposées suivant un diamètre orienté perpendiculairement au diamètre suivant lequel sont disposées les deux précédentes rainures 18.

Selon le principe illustré par la figure 8, chaque tête sphérique 12 ou 15 d'un flasque 9 ou 10 est prévue pour s'engager dans une rainure 18 ou 20 correspondante de la pièce d'accouplement 11. Plus précisément, les deux têtes sphériques 12 du premier flasque 9 sont logées respectivement dans les deux rainures 18 d'une face circulaire de la pièce d'accouplement 11, tandis que les deux têtes sphériques 15 du second flasque 10 sont logées respectivement dans les deux rainures 20 de l'autre face circulaire de la pièce d'accouplement 11.

Ainsi constitué, le dispositif d'accouplement 8 peut accepter un angle d'inclinaison α entre l'axe A1 de l'arbre 7 du moteur électrique 2, d'une part, et l'axe A2 de la vis sans fin 4 d'autre part, comme l'illustre la figure 8, sans induire d'effort notamment en direction radiale.

Diverses configurations, représentées sur les figures 9 et suivantes, sont envisageables pour obtenir un accrochage des têtes sphériques 12 et 15 des deux flasques 9 et 10 dans les rainures 18 et 20 correspondantes de la pièce d'accouplement 11.

Dans un premier mode de réalisation, montré sur les figures 9 et 10, la pièce d'accouplement 11 comporte, de part et d'autre de chaque rainure 18 ou 20, des cavités 21 débouchant sur la face périphérique 19 de cette pièce d'accouplement 11. Il s'agit ici, plus particulièrement, de plusieurs cavités 21 séparées par de minces voiles de matière.

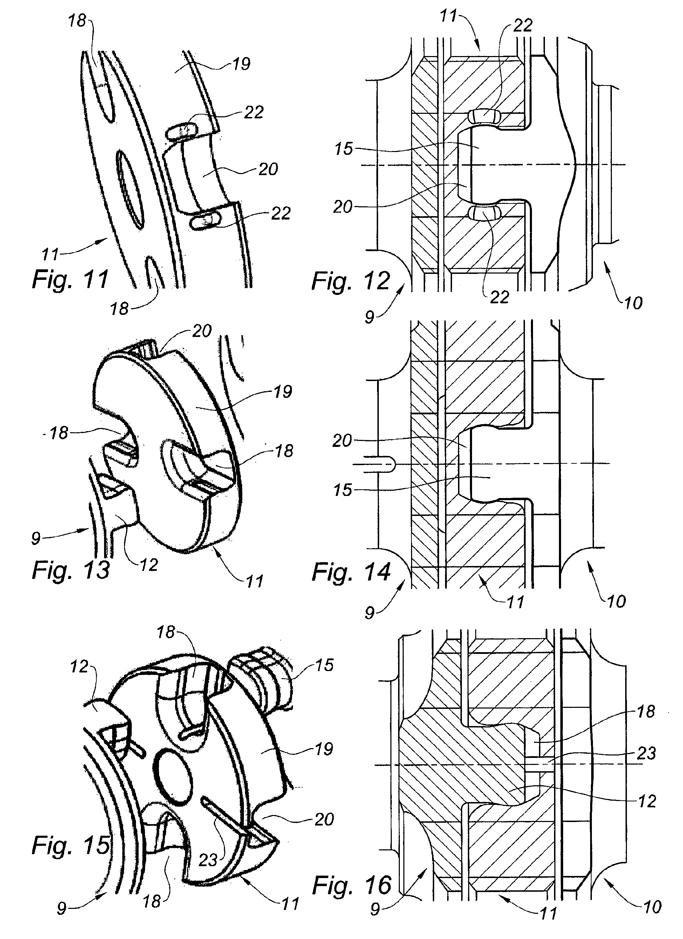

Dans un deuxième mode de réalisation, montré sur les figures 11 et 12 et pouvant être considéré comme une variante du précédent, une seule cavité 22 est prévue de chaque côté d'une rainure 18 ou 20, cette cavité 22 débouchant à la périphérie de la pièce d'accouplement 11.

Dans un troisième mode de réalisation, montré sur les figures 13 et 14, la pièce d'accouplement 11 reste pleine, c'est-à-dire qu'elle ne comporte aucune cavité telle que décrite précédemment.

Enfin, dans un quatrième mode de réalisation montré sur les figures 15 et 16, et correspondant aussi aux figures 6 et 7, les rainures 18 et 20 de la pièce d'accouplement 11 comportent, sur leur fond, une fente radiale 23 débouchant sur la face opposée de cette pièce d'accouplement.

En se référant à la figure 3, on décrira maintenant le mode opératoire pour l'assemblage du dispositif d'accouplement 8 :

Une vis de fixation 24 centrale est d'abord montée au travers du second flasque 10, tandis qu'une bague de serrage 25 métallique est montée autour du moyeu central 14 du premier flasque 9. Il est à noter que ce moyeu 14 est fendu longitudinalement, par exemple avec deux fentes latérales diamétralement opposées, et comporte des cannelures axiales internes 26. De manière similaire, le moyeu central 16 du second flasque 10 comporte des cannelures axiales internes 27.

Ensuite, les deux flasques 9 et 10 sont assemblés sur la pièce d'accouplement 11 par les moyens d'accrochage illustrés sur les figures 9 à 16. Puis l'ensemble est amené sur l'extrémité 17 de la vis sans fin 4, extrémité qui est cannelée, et est assemblé sur cette extrémité par serrage de la vis de fixation 24 dans un trou taraudé 28 correspondant.

Enfin, l'arbre 7 du moteur électrique 2 est monté dans le moyeu 14 du premier flasque 9, la partie terminale de l'arbre 7 étant cannelée et la bague de serrage 25 pressant les cannelures du moyeu 14 sur celles de l'arbre 7.

Par ce mode opératoire, il est garanti de toujours avoir la même position des deux flasques 9 et 10 l'un par rapport à l'autre, et aussi par rapport à la pièce d'accouplement 11, et d'éviter le flambage de la vis sans fin 4 lors de la mise en place du flasque 10.

On ne s'écarterait pas de cadre de l'invention, telle que définie dans les revendications annexées :
- par des modifications du détail des formes des composants, par exemple en rendant les rainures non débouchantes à la périphérie de la pièce d'accouplement, ceci pour constituer des « poches » aptes à retenir de la graisse ;
- par le recours à tous équivalents, par exemple en remplaçant les liaisons par cannelures par d'autres types de liaisons en rotation ;
- par l'application à des directions assistées électriques de toutes sortes.

## Revendications

1. Dispositif d'accouplement entre un moteur électrique (2) et un réducteur (3) d'une direction assistée électrique de véhicule automobile, plus particulièrement entre l'arbre (7) du moteur électrique (2) d'assistance et une vis sans fin (4) constituant un arbre d'entrée du réducteur (3), **caractérisé en ce qu'**il est constitué par :
- un premier flasque (9) comportant deux têtes sphériques (12) diamétralement opposées, le premier flasque (9) étant montable sur l'arbre (7) du moteur électrique (2),
- un second flasque (10) comportant deux têtes sphériques (15) diamétralement opposées, le second flasque (10) étant montable sur une extrémité (17) de la vis sans fin (4), en regard du premier flasque (9),
- une pièce d'accouplement (11) en forme de disque, insérée entre les deux flasques (9, 10), la pièce d'accouplement (11) comportant, sur l'une de ses faces, deux rainures (18) à fond sphérique diamétralement opposées, logeant respectivement les deux têtes sphériques (12) du premier flasque (9), et cette pièce d'accouplement (11) comportant, sur son autre face, deux autres rainures (20) à fond sphérique diamétralement opposées, disposées suivant un diamètre perpendiculaire au diamètre suivant lequel sont disposées les précédentes rainures (18), ces autres rainures (20) logeant respectivement les deux têtes sphériques (15) du second flasque (10).

2. Dispositif d'accouplement selon la revendication 1, **caractérisé en ce que** les rainures (18, 20) de la pièce d'accouplement (11) sont des rainures à fond plein.

3. Dispositif d'accouplement selon la revendication 1, **caractérisé en ce que** les rainures (18, 20) de la pièce d'accouplement (11) comportent, sur leur fond, une fente radiale (23) débouchant sur la face opposée de ladite pièce d'accouplement (11).

4. Dispositif d'accouplement selon l'une des revendications 1 à 3, **caractérisé en ce que** la pièce d'accouplement (11) comporte, de part et d'autre de chaque rainure (18, 20), des cavités (21, 22) débouchant à la périphérie (19) de cette pièce d'accouplement (11).

5. Dispositif d'accouplement selon l'une des revendications 1 à 4, **caractérisé en ce que** les rainures (18, 20) sont elles-mêmes débouchantes à la périphérie (19) de la pièce d'accouplement (11).

6. Dispositif d'accouplement selon l'une des revendications 1 à 5, **caractérisé en ce que** les rainures (18, 20) sont non débouchantes à la périphérie (19) de la pièce d'accouplement (11), pour constituer des poches aptes à retenir de la graisse.

7. Dispositif d'accouplement selon l'une des revendications 1 à 6, **caractérisé en ce que** le premier flasque (9) comporte, pour son montage sur l'arbre (7) du moteur électrique (2), des cannelures axiales internes (26) formées sur son moyeu (14) et prévues pour être engagées sur une partie terminale cannelée dudit arbre (7), des moyens de serrage (25) étant prévus pour immobiliser axialement le premier flasque (9) sur cet arbre (7) dans une position relative appropriée.

8. Dispositif d'accouplement selon l'une des revendications 1 à 7, **caractérisé en ce que** le second flasque (10) comporte, pour son montage sur l'extrémité (17) de la vis sans fin (4), des cannelures axiales internes (27) formées sur son moyeu (16) et prévues pour être engagées sur cette extrémité (17) cannelée de la vis sans fin (4), une vis de fixation (24) centrale étant prévue pour le maintien du second flasque (10) sur l'extrémité (17) de la vis sans fin (4).

## Patentansprüche

1. Kopplungsvorrichtung zwischen einem Elektromotor (2) und einem Untersetzungsgetriebe (3) einer elektrischen Kraftfahrzeug-Servolenkung, genauer gesagt zwischen der Welle (7) des Servoelektromotors (2) und einer Schnecke (4), die eine Antriebswelle des Untersetzungsgetriebes (3) bildet, **dadurch gekennzeichnet, dass** sie besteht aus:
- einem ersten Flansch (9), der zwei diametral entgegengesetzte Kugelköpfe (12) umfasst, wobei der erste Flansch (9) auf die Welle (7) des Elektromotors (2) montiert werden kann,
- einem zweiten Flansch (10), der zwei diametral entgegengesetzte Kugelköpfe (15) umfasst, wobei der zweite Flansch (10) auf ein Ende (17) der Schnecke (4) gegenüber dem ersten Flansch (9) montiert werden kann,
- einem scheibenförmigen Kopplungsteil (11), das zwischen den beiden Flanschen (9, 10) eingefügt wird, wobei das Kopplungsteil (11) auf einer seiner Seiten zwei diametral entgegengesetzte Nuten (18) mit kugelförmigem Boden umfasst, die jeweils die beiden Kugelköpfe (12) des ersten Flanschs (9) aufnehmen, und wobei dieses Kopplungsteil (11) auf seiner anderen Seite zwei andere diametral entgegengesetzte Nuten (20) mit kugelförmigem Boden umfasst, die gemäß einem Durchmesser angeordnet sind, der zu dem Durchmesser rechtwinklig ist, gemäß dem die vorhergehenden Nuten (18) angeordnet sind, wobei diese anderen Nuten (20) jeweils die beiden Kugelköpfe (15) des zweiten Flanschs (10) aufnehmen.

2. Kopplungsvorrichtung nach Anspruch 1, **dadurch gekennzeichnet, dass** die Nuten (18, 20) des Kopplungsteils (11) Nuten mit festem Boden sind.

3. Kopplungsvorrichtung nach Anspruch 1, **dadurch gekennzeichnet, dass** die Nuten (18, 20) des Kopplungsteils (11) auf ihrem Boden eine radiale Nut (23) umfassen, die auf der Seite gegenüber dem Kopplungsteil (11) ausmündet.

4. Kopplungsvorrichtung nach einem der Ansprüche 1 bis 3, **dadurch gekennzeichnet, dass** das Kopplungsteil (11) auf beiden Seiten jeder Nut (18, 20) Hohlräume (21, 22) umfasst, die am Umfang (19) dieses Kopplungsteils (11) ausmünden.

5. Kopplungsteil nach einem der Ansprüche 1 bis 4, **dadurch gekennzeichnet, dass** die Nuten (18, 20) selber am Umkreis (19) des Kopplungsteils (11) ausmünden.

6. Kopplungsteil nach einem der Ansprüche 1 bis 5, **dadurch gekennzeichnet, dass** die Nuten (18, 20) nicht am Umkreis (19) des Kopplungsteils (11) ausmünden, um Kammern zum Beinhalten von Schmierfett zu bilden.

7. Kopplungsteil nach einem der Ansprüche 1 bis 6, **dadurch gekennzeichnet, dass** der erste Flansch (9) für seine Montage an der Welle (7) des Elektromotors (2) interne axiale Keilwellen (26) umfasst, die auf seiner Nabe (14) gebildet sind und bereitgestellt werden, um auf einem Keilwellen-Endteil der Welle (7) in Eingriff gebracht zu werden, wobei Spannmittel (25) bereitgestellt werden, um den ersten Flansch (9) axial auf dieser Welle (7) in einer geeigneten relativen Position festzustellen.

8. Kopplungsteil nach einem der Ansprüche 1 bis 7, **dadurch gekennzeichnet, dass** der zweite Flansch (10) für seine Montage am Ende (17) der Schnecke (4) interne axiale Keilwellen (27) umfasst, die auf seiner Nabe (16) gebildet sind und bereitgestellt werden, um auf diesem Keilwellen-Ende (17) der Schnecke (4) in Eingriff gebracht zu werden, wobei eine mittlere Befestigungsschraube (24) zum Halten des zweiten Flanschs (10) am Ende (17) der Schnecke (4) bereitgestellt wird.

## Claims

1. A coupling device between an electric motor (2) and a reduction gear (3) for an electric power steering of an automotive vehicle, more particularly between the shaft (7) of the assistance electric motor (2) and a worm (4) constituting an input shaft of the reduction gear (3), **characterized in that** the coupling device is comprised of:
- A first flange (9) including two diametrically opposed spherical heads (12), the first flange (9) being mountable on the shaft (7) of the electric motor (2),
- A second flange (10) including two diametrically opposed spherical heads (15), the second flange (10) being mountable on one end (17) of the worm, facing the first flange (9),
- A disc-shaped coupling piece (11), inserted between the two flanges (9, 10), the coupling piece (11) including, on one of its faces, two diametrically opposed grooves (18) having a spherical bottom, housing respectively the two spherical heads (12) of the first flange (9), and this coupling piece (11) including, on its other face, two other diametrically opposed grooves (20) having a spherical bottom, disposed following a diameter perpendicular to the diameter following which the foregoing grooves (18) are disposed, these other grooves (20) housing respectively the two spherical heads (15) of the second flange (10).

2. The coupling device according to claim 1, **characterized in that** the grooves (18, 20) of the coupling piece (11) are solid bottom grooves.

3. The coupling device according to claim 1, **characterized in that** the grooves (18, 20) of the coupling piece (11) include, on their base, a radial slot (23) opening onto the opposite face of said coupling piece (11).

4. The coupling device according to any of claims 1 to 3, **characterized in that** the coupling piece (11) includes, at both sides of each groove (18, 20), cavities (21, 22) leading to the periphery (19) of the coupling piece (11).

5. The coupling device according to any of claims 1 to 4, **characterized in that** the grooves (18, 20) themselves are leading to the periphery (19) of the coupling piece (11).

6. The coupling device according to any of claims 1 to 5, **characterized in that** the grooves (18, 20) are solid at the periphery (19) of the coupling piece (11), to constitute pockets capable of retaining grease.

7. The coupling device according to any of claims 1 to 6, **characterized in that** the first flange (9) includes, for its mounting on the shaft (7) of the electric motor (2), internal axial splines (26) formed on its hub (14) and provided to be engaged on a splined terminal portion of said shaft (7), clamping means (25) being provided to axially immobilize the first flange (9) on this shaft (7) in an appropriate related position.

8. The coupling device according to any of claims 1 to 7, **characterized in that** the second flange (10) includes, for its mounting on the end (17) of the worm (4), internal axial splines (27) formed on its hub (16) and provided to be engaged on this splined end (17) of the worm+ (4), a central fixing screw (24) being provided for holding the second flange (10) on the end (17) of the worm (4).
